Europäisches Patentamt

European Patent Office

Office européen des brevets

(11) Veröffentlichungsnummer: **0 479 013 A1**

# EUROPÄISCHE PATENTANMELDUNG

(21) Anmeldenummer: **91115625.5**

(22) Anmeldetag: **14.09.91**

(51) Int. Cl.5: **B65G 69/00**, **E06B 7/16**

(30) Priorität: **05.10.90 DE 4031544**

(43) Veröffentlichungstag der Anmeldung:
**08.04.92 Patentblatt 92/15**

(84) Benannte Vertragsstaaten:
**AT BE CH DE DK ES FR GB IT LI NL SE**

(71) Anmelder: **Alten, Kurt**
**Ringstrasse 14**
**W-3015 Wennigsen(DE)**

(72) Erfinder: **Alten, Kurt**
**Ringstrasse 14**
**W-3015 Wennigsen(DE)**

(74) Vertreter: **Depmeyer, Lothar**
**Auf der Höchte 30**
**W-3008 Garbsen 1(DE)**

(54) Verformbare Dichtung des Spaltes zwischen dem Rand einer Gebäudeöffnung und dem Heck eines an diese herangefahrenen Fahrzeuges.

(57) Um bei derartigen Dichtungen beim Andocken eines Fahrzeuges eine unerwünschte Durchbiegung eines oberhalb der Gebäudeöffnung (2) befindlichen Querträgers (5) zur Aufhängung einer Querteils (3) der Dichtungsschürze zu unterbinden, ist dem Querträger (5) eine Verspannung zugeordnet, dessen Druckstäbe (16) in Richtung auf das Gebäude verlaufen und dessen Spannseil(17)- an den Enden des Querträgers (5) verankert- über einen oder mehrere Druckstäbe (16) auf den Querträger einwirkt.

Fig. 1

Die Erfindung betrifft eine verformbare Dichtung zwischen dem Rand einer Gebäudeöffnung und dem Heck eines an diese herangefahrenen Fahrzeuges mit einer verformbaren Schürze aus zwei zu beiden Seiten der Gebäudeöffnung angeordneten, senkrechten Streifen und einem im Bereich der oberen Streifenenden befindlichen Querteil, das an einem Querträger aufgehängt ist, von dem aus sich nach hinten zum Gebäude hin eine Dachplane erstreckt, wobei die beiden Streifen an in Richtung auf das Gebäude nachgiebigen Tragkörpern gelagert sind und auch der Querträger in Richtung auf das Gebäude bewegbar ist.

Es ist bekannt, den Querträger als unterspannten Träger auszuführen in der Weise dass ein spannbares Zugseil vorgesehen ist, das über einen oder mehrere Druckstäbe von unten her auf den Querträger einwirkt, um so dessen Durchbiegung nach unten zu verhindern. Diese Verspannung des Querträgers hat sich bereits bewährt, jedoch können dann Nachteile auftreten, wenn verhältnismässig grosse Fahrzeuge andocken müssen, das zu einer entprechend grossen Verformungskraft der Schürze führen. Es ist nicht zu vermeiden, dass eine Anpassung an die Kontur des Fahrzeughecks nicht zustandekommen kann, wenn eine zu grosse Beaufschlagung der Schürze in Richtung auf das Gebäude stattfindet.

Der Erfindung liegt die Aufgabe zugrunde, die eingangs erwähnten Dichtungen so zu verbessern, dass die Abdichtung auch dann in ausreichendem Masse sichergestellt ist, wenn ein vergleichsweise hohes und breites Fahrzeug andocken muss und demgemäss eine starke Verformung der Schürze in Richtung auf das Gebäude stattfindet.

Zur Lösung dieser Aufgabe weist erfindungsgemäss der Querträger nicht nur eine seine Durchbiegung nach unten beeinflussende Verspannung, sondern zusätzlich noch eine Verspannung auf, die den Queträger gegen eine Durchbiegung in Richtung auf das Gebäude versteift. Demgemäss sind ein oder mehrere Druckstäbe vorgesehen, die etwa waagerecht verlaufend und sich hinter dem Querträger befindlich von einem Spannseil beaufschlagt werden. Dabei kann das Spannseil auch mit einem Spannschloss ausgerüstet sein, um die Seilspannung und damit die Biegesteifigkeit des Querträgers in Richtung auf das Gebäude beeinflussen zu können.

Eine solche zusätzliche Verspannung hat zur Folge, dass sich auch bei grösseren Verformungskräften der Schürze die Schürze verformt und entsprechend an das Fahrzeug anschmiegen kann. Der Querträger kann nicht zum Nachteil einer guten Verformbarkeit und Anschmiegbarkeit der Schürze nach hinten in Richtung auf das Gebäude verformt werden.

Weitere Einzelheiten der Erfindung werden anhand der Zeichnung erläutert, in der ein Ausführungsbeispiel der Erfindung dargestellt ist. Es zeigen :

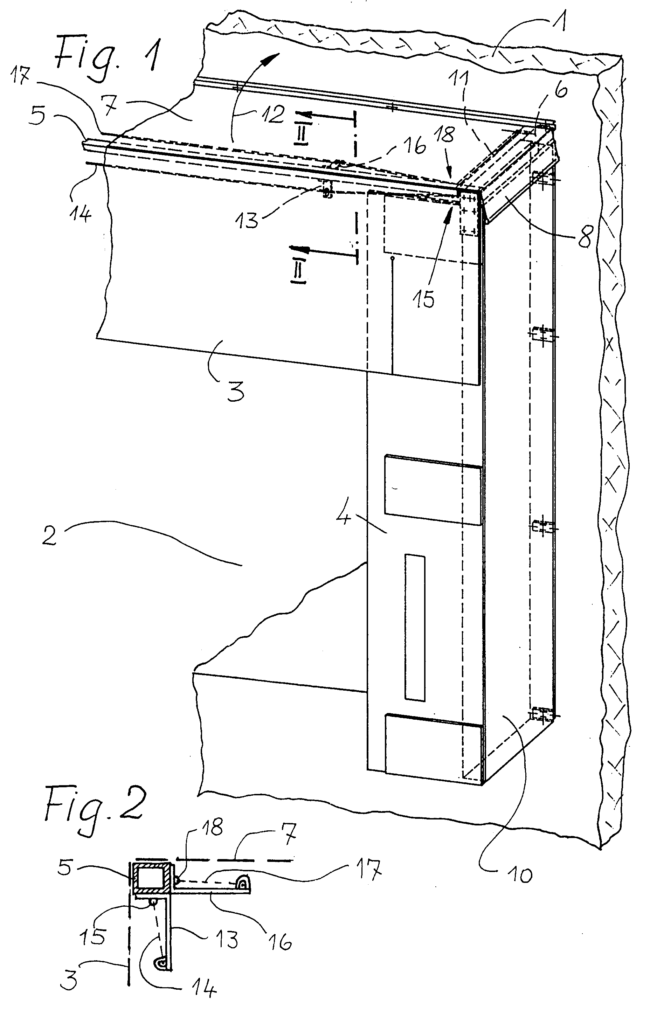

Fig. 1     die rechte Hälfte einer sog. Torabdichtung in schaubildlicher Darstellung und

Fig. 2     einen Schnitt nach der Linie II - II von Fig. 1.

Die Wandung 1 des Gebäudes hat eine Gebäudeöffnung 2, der ein Tor z.B. ein Sektionaltor zugeordnet sein kann. Um den Spalt der Gebäudeöffnung 2 bzw. dem Rand dieser Öffnung gegenüber dem Heck eines angedockten Fahrzeuges abzudichten, ist die Dichtung gemäss Zeichnung vorgesehen.

Mit Abstand von der Wandung 1 ist eine verformbare Schürze vorgesehen, die aus einem oben gelegenen Querteil 3 und zwei zu beiden Seiten der Gebäudeöffnung 2 befindlichen, senkrechten Streifen 4 besteht. Die Bauelemente 3, 4 bestehen aus einem lappigen, folienartigen Material, das eine Verformung und eine Anpassung an die Kontur des Fahrzeuges zulässt. In der Regel bestehen diese Teile aus mit Kunststoff oder Gummi behandelten Geweben.

Das Querteil 3 ist an seinem oberen Rand gardinenartig an einem Querträger 5 befestigt, von dem aus sich eine Dachplane 7 nach hinten erstreckt. Sie ist an der Aussenwand 1 befestigt. Dieser Querträger 5 ist an seinen Enden unten ausgespart. In die Aussparung greift ein an der Aussenwand 1 befestigter Arm 6 ein, der somit den Querträger 5, das Querteil 3 und vorne die Dachplane 7 unterfängt und hält. Im übrigen ist die Dachplane 7 an ihren Enden mit einem frei herabhängenden Überhang 8 versehen.

Die beiden Streifen 4 werden von an der Aussenwand 1 befestigten, in Richtung auf diese Wand elastisch nachgiebigen Tragkörpern 1o gehalten.

Da der Querträger 5 an seinen Enden auf den beiden Armen 6 ruht, ist seine Lagerung von derjenigen der Streifen 4 bzw. den zugehörigen Tragkörpern 1o unabhängig.Um unter diesen Voraussetzungen für dem Querträger 5 bzw. seinem Querteil 3 bei einer Beaufschlagung durch das Heck eines andockenden Fahrzeuges in Richtung auf das Gebäude eine Ausweichmöglichkeit zu geben, sind die Enden des Querträgers 5 an sich in Richtung auf das Gebäude erstreckenden bei 11 angedeuteten Lenkern gelagert, um so den Querträger 5 mit dem Querteil 3 unter Anhebung der Dachplane 7 in Richtung des Pfeiles 12 nach oben zu verschwenken. Ggfs. kann aber auch der Querträger 5 durch eine gleitende Lagerung seiner Enden auf den Armen 6 verschiebbar gelagert werden, um auch so eine rückziehende Bewegung des Querträgers 5 zu erzielen.

Der Querträger 5 ist mit zwei sich nach unten erstreckenden Druckstäben 13 versehen, auf die ein Spannseil 14 einwirkt, dass an den Enden des Querträgers 5 z.B. durch eine Öse 15 befestigt ist. Das Spannseil 14 und die beiden Druckstäbe 13 verhindern eine Durchbiegung des Querträgers 5 nach unten.

Der Querträger ist ausserdem mit zwei sich nach hinten in Richtung auf das Gebäude erstreckenden Druckstäben 16 fest verbunden, denen ebenfalls ein Spannseil 17 zugeordnet ist, dessen Enden an Ösen 18 verankert sind, welche im Endbereich des Querträgers 5 an diesem Befestigt sind. Durch eine derartige Verspannung des Querträgers 5 wird dessen Biegesteifigkeit erhöht, wenn im wesentlichen waagerechte Kräfte auf das Querteil 3 einwirken. Ist nunmehr der Querträger 5 in diesem Sinne verstärkt, kann eine entsprechend grössere Verformung der Schürze bzw. des Querteils 3 eintreten, um so das Heck des Fahrzeuges besser zu umschliessen und eine verbesserte Anpassung an die Gestalt des Fahrzeughecks zu ermöglichen.

Die beiden Spannseile 14, 17 können mit Spannschlössern ausgestattet sein, um die Seilspannung verändern zu können.

Es sei noch erwähnt, dass die beiden Seitenteile 1o eine nachgiebige, wasserdichte Verbindung zwischen den Streifen 4 und der Aussenwand 1 herstellen. Die Seitenteile 1o bestehen aus verkleideten Schaumstoffblöcken.

**Patentansprüche**

1. Verformbare Dichtung des Spaltes zwischen dem Rand einer Gebäudeöffnung und dem Heck eines an diese herangefahrenen Fahrzeuges mit einer verformbaren Schürze aus zwei zu beiden Seiten der Gebäudeöffnung angeordneten, senkrechten Streifen und einem im Bereich der oberen Streifenenden befindlichen Querteil, das an einem in Richtung auf das Gebäude nachgiebig bewegbaren Querträger aufgehängt ist, von dem aus sich nach hinten zum Gebäude hin eine Dachplane erstreckt, wobei der Querträger mit einer Verspannung zur Beeinflussung seiner Biegefähigkeit versehen ist, die aus einem im Endbereich des Querträgers verankerten Spannseil und einem oder mehreren Druckstäben besteht, die durch das Spannseil auf den Querträger einwirken, dadurch gekennzeichnet, dass sich die Druckstäbe(16) in Richtung auf das Gebäude erstrecken und die Verspannung den Querträger (5) gegen eine Durchbiegung in Richtung auf das Gebäude versteift.

2. Dichtung nach Anspruch 1, dadurch gekennzeichnet, dass der Querträger (5) sich nach unten und in Richtung auf das Gebäude erstreckende Druckstäbe (13,16) und zugehörige Spannseile (14,17) aufweist in der Weise, dass zwei Verspannungen gegeben sind, von denen die eine den Querträger gegen Durchbiegen nach unten und der andere den Querträger gegen Durchbiegen in Richtung auf das Gebäude versteift.

Fig. 1

Fig. 2

| | **EINSCHLÄGIGE DOKUMENTE** | | EP 91115625.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| A | <u>DE - A - 2 927 233</u> (HÜBNER GUMMI- UND KUNSTSTOFF GMBH) * Fig. * -- | 1 | B 65 G 69/00 E 06 B 7/16 |
| A | <u>EP - A - 0 258 779</u> (KURT ALTEN) * Zusammenfassung; Fig. 1 * -- | 1 | |
| A | <u>EP - A - 0 371 320</u> (KURT ALTEN) * Fig. 3 * ---- | | |
| | | | RECHERCHIERTE SACHGEBIETE (Int. Cl.⁵) |
| | | | B 65 G E 06 B |
| | Der vorliegende Recherchenbericht wurde für alle Patentansprüche erstellt. | | |

| Recherchenort | Abschlußdatum der Recherche | Prüfer |
|---|---|---|
| WIEN | 06-12-1991 | HENGL |